# EUROPÄISCHE PATENTSCHRIFT

(11) **EP 3 717 282 B1**
(45) Veröffentlichungstag und Bekanntmachung des Hinweises auf die Patenterteilung: **26.01.2022**
(21) Anmeldenummer: 18773720.0
(22) Anmeldetag: 10.09.2018
(51) Int. Cl.: B60C 11/13, B60C 11/03, B60C 11/12

(54) **FAHRZEUGLUFTREIFEN**
PNEUMATIC VEHICLE TYRE
PNEUMATIQUE DE VÉHICULE

(30) Priorität: 30.11.2017 DE 102017221579
(43) Veröffentlichungstag der Anmeldung: 07.10.2020
(73) Patentinhaber: Continental Reifen Deutschland GmbH, 30165 Hannover (DE)
(72) Erfinder: SCHLITTENHARD, Jan, 30149 Hannover (DE); BAUER, Claudia, 30149 Hannover (DE); BERGER, Christoph, 30149 Hannover (DE); WIESE, Klaus, 30149 Hannover (DE)
(74) Vertreter: Continental Corporation
(86) Internationale Anmeldenummer: PCT/EP2018/074241
(87) Internationale Veröffentlichungsnummer: WO 2019/105619

(56) Entgegenhaltungen:
- WO-A1-2007/028438
- WO-A1-2015/086186
- WO-A1-2016/156745
- DE-T2- 69 917 139
- JP-A- 2001 191 741
- JP-A- 2009 107 376
- JP-A- 2009 214 697
- JP-A- 2011 140 254
- JP-A- 2016 084 082
- US-A1- 2015 151 586

## Beschreibung

Die Erfindung betrifft einen Fahrzeugluftreifen mit einem Laufstreifen mit zumindest einer Profilblöcke aufweisenden oder profilblockartig strukturierten Profilblockreihe, wobei die Profilblöcke in Umfangsrichtung durch Querrillen voneinander getrennt sind, welche sich unter einem Winkel ≤ 45° zur axialen Richtung erstrecken, wobei jeder Profilblock querrillenseitig und an der Laufstreifenperipherie von Profilblockkanten begrenzt und mit einer Anzahl von sich parallel oder weitgehend parallel zu den Querrillen erstreckenden Einschnitten und Mikroeinschnitten versehen und von diesen vorzugsweise durchquert ist, wobei die Einschnitte eine Breite von 0,4 mm bis 1,2 mm und die Mikroeinschnitte eine Breite < 0,4 mm, eine Mindestbreite von 0,2 mm und eine Tiefe von 0,2 mm bis 0, 5 mm aufweisen.

Es ist bekannt und üblich, in Laufstreifen von Fahrzeugluftreifen, die für den Einsatz unter winterlichen Fahrbedingungen vorgesehen sind, Profilblöcke und/oder Profilrippen weitgehend gleichmäßig mit einer Vielzahl von parallel zueinander verlaufenden Einschnitten und Mikroeinschnitten zu versehen. Im Gegensatz zu herkömmlichen, in Profilblöcken ausgebildeten Einschnitten schließen sich Mikroeinschnitte in Folge ihrer geringen Tiefe nicht unter den beim Abrollen auftretenden Kräften. Die durch die Mikroeinschnitte gebildete Oberflächenstruktur trägt bei neuen Reifen, insbesondere bei sogenannten "Softcompound"-Winterreifen, dazu bei, den sich beim Bremsen und beim Beschleunigen auf schnee- und/oder eisbedeckten Fahrbahnen zwischen dem Laufstreifen und dem Untergrund bildenden Wasserfilm von der Oberfläche der Blöcke schnell abzuleiten und den Laufstreifen derart gut zu entwässern. Dieser Effekt tritt insbesondere bei Temperaturen knapp unter dem Gefrierpunkt oder auf oberflächlich nassem Eis auf. Die Höhe des sich auf der Fahrbahn bildenden Wasserfilms hängt somit unter anderem von der Umgebungstemperatur und auch der Intensität der Sonneneinstrahlung ab. Bei einer Umgebungstemperatur knapp unter 0° C und längerer, intensiverer Sonneneinstrahlung schmilzt besonders viel Eis bzw. Schnee, sodass auch ein relativ hoher Wasserfilm gebildet wird. Zum Fahren auf solchen Fahrbahnen ist es somit vorteilhaft, wenn der Laufstreifen eine besonders ausgeprägte Oberflächenstruktur mit Einschnitten und Mikroeinschnitten aufweist.

Ein Fahrzeugluftreifen der eingangs genannten Art ist beispielsweise aus der WO 2015/086186 A1 bekannt. Dieser Fahrzeugluftreifen weist einen Laufstreifen mit Profilblöcken und blockartig strukturierten Profilrippen auf, welche jeweils eine Anzahl von Einschnitten aufweisen und mit einer Vielzahl von Mikroeinschnitten überzogen sind, die Schnitt- und Kreuzungsstellen zu den "normalen" Einschnitten aufweisen. Aus der WO 2007/028438 A1 ist ein Fahrzeugluftreifen bekannt, dessen Laufstreifen bei einer Ausführung Profilblöcke mit Einschnitten mit einer Breite größer als 0,4 mm und Mikroeinschnitte mit einer Breite von 0,1 mm bis 0,3 mm aufweisen, wobei sich sämtliche Einschnitte und Mikroeinschnitte parallel zueinander und parallel zu jenen Profilblockkanten, welche die Querrillen begrenzen, erstrecken. Jeweils ein Einschnitt wechselt mit einem Mikroeinschnitt ab, wobei bei den querrillenseitigen Profilblockkanten jeweils ein Einschnitt verläuft.

Aus der DE 699 17 139 T2 ist ein Fahrzeugluftreifen mit einem Laufstreifen mit Profilblöcken bekannt, welche durch Umfangsrillen und in axialer Richtung verlaufende Querrillen voneinander getrennt sind. Jeder Profilblock ist mit einer Vielzahl von in axialer Richtung verlaufenden und mit einer Vielzahl von in Umfangsrichtung verlaufenden Mikroeinschnitten versehen, welche jeweils eine Breite und eine Tiefe von 0,3 mm bis 1,5 mm, beispielsweise von 0,7 mm, aufweisen. Die Mikroeinschnitte durchqueren den jeweiligen Profilblock und bilden dabei eine in Draufsicht netzförmige Mikroeinschnittstruktur. Beim gezeigten Ausführungsbeispiel ist in jedem Profilblock ferner ein Einschnitt ausgebildet, welcher stufenförmig sowie innerhalb der Mikroeinschnittstruktur verläuft, eine Tiefe von 50% bis 95% der Profiltiefe und eine geringere Breite als die Mikroeinschnitte aufweist.

Aus der JP 2001 191 741 A ist ein Fahrzeugluftreifen mit einem Laufstreifen mit Profilblöcken mit in Draufsicht parallel zueinander sowie im Wesentlichen in axialer Richtung verlaufenden Einschnitten und Mikroeinschnitten bekannt. Die Einschnitte weisen eine Breite von 0,3 mm bis 2,0 mm und eine Tiefe von 3,0 mm bis 11,5 mm auf. Die Mikroeinschnitte weisen eine Tiefe von höchstens 0,5 mm und eine Breite von 50% bis 150% der Breite der Einschnitte auf.

Der Erfindung liegt die Aufgabe zugrunde, bei einem Fahrzeugluftreifen der eingangs genannten Art, welcher Profilblöcke und/oder profilblockartig strukturierte Profilrippen mit Mikroeinschnitten und Einschnitten aufweist, die Wintereignung und die Winterfahreigenschaften zu optimieren, insbesondere sollen die Schnee- und Eisgriffeigenschaften und vor allem der erwähnte Effekt der Mikroeinschnitte, nämlich für eine Ableitung des sich auf Eis/Schnee bildenden Wasserfilms zu sorgen, gegenüber den bekannten Ausführungen deutlich verbessert sein.

Gelöst wird die gestellte Aufgabe erfindungsgemäß dadurch, dass die Profilblöcke unmittelbar an die Querrillen anschließend erhöhte Kantenbereiche aufweisen, welche zumindest abschnittsweise entlang der querrillenseitigen Profilblockkanten verlaufen, gegenüber dem Niveau der sonstigen Profilblockoberfläche in radialer Richtung eine Höhe von 0,2 mm bis 0,5 mm und an ihrer Oberseite jeweils eine Breite von 0,2 mm bis 1,2 mm aufweisen, wobei die Einschnitte und die Mikroeinschnitte in Draufsicht parallel zu den querrillenseitigen Profilblockkanten verlaufende Endabschnitte und ansonsten Abschnitte aufweisen, die entlang von aneinander anschließenden, abwechselnd zur einen und zur anderen Profilblockkante weisenden, basislosen, vorzugsweise gleichschenkeligen und zumindest weitgehend übereinstimmend ausgeführten Trapezen verlaufen, wobei die unmittelbar aneinander angrenzenden Trapeze gemeinsame Trapezschenkel-Abschnitte besitzen.

Durch die Erfindung lassen sich die oben erwähnten Effekte der Mikroeinschnitte merklich verbessern und optimieren, da die erhöhten Kantenbereiche auf eisigem Untergrund einen höheren Kantendruck der Profilblöcke bewirken, welcher den Wischeffekt unterhalb der querrillenseitigen Profilblockkanten erhöhen, insbesondere auf nassem, mit einem Wasserfilm überzogenen Eis. Ist eine dünne Schneeschicht auf dem Eis vorhanden, so trägt der erhöhte Kantendruck auch dazu bei, ein Wegwischen dieser Schneeschicht zu unterstützen. Dadurch wird die übrige Profilblockoberfläche nicht mehr wie bei üblichen Profilblöcken von Schneekristallen überzogen und erzeugt so selbst eine bessere Gummi/Eisreibung. Dieser Effekt ist vor allem auch dann deutlich spürbar und von Vorteil, wenn sich Raureif auf eisigem Untergrund befindet. Auf schneeigem Untergrund erleichtern die erhöhten Kantenbereiche das Eindringen in den Schnee auf der Oberfläche der Fahrbahn und erhöhen so die Fräswirkung der Blockkanten, da hinter den erhöhten Kantenbereichen ein größerer Freiwinkel entsteht, der unter anderem die Abführung der Schneekristalle, die quasi Sekundärspäne bilden, unterstützt. Die Einschnitte und Mikroeinschnitte sind vor allem in Profilblöcken in den schulterseitigen Bereichen des Laufstreifens hinsichtlich Traktion, Bremsen und Seitenführung besonders vorteilhaft.

Bei einer bevorzugten Ausführung weisen die erhöhten Kantenbereiche über ihre Erstreckungslänge eine konstante Höhe und eine konstante Breite auf. Insbesondere verlaufen die erhöhten Kantenbereiche über die gesamte Länge der querrillenseitigen Profilblockkanten, sodass durch diese Maßnahmen ein vorteilhafter, besonders gleichmäßiger höherer Kantendruck der Profilblöcke erzielt wird.

Für eine besonders gute Fräswirkung der Blockkanten auf schneeigem Untergrund sind einige bevorzugte Ausgestaltungen von Vorteil, etwa dass die erhöhten Kantenbereiche an ihrer Oberseite eine Breite von 0,3 mm bis 1,0 mm aufweisen, ferner dass die erhöhten Kantenbereiche zum Niveau der sonstigen Profilblockoberfläche entweder über in radialer Richtung verlaufende oder über schräg geneigte, beispielsweise konvex gerundet ausgeführte Flankenflächen übergehen und dass die erhöhten Kantenbereiche an ihrer Basis eine insbesondere konstante Breite aufweisen, welche zumindest der Breite an der Oberseite entspricht, insbesondere 0,1 mm bis 0,4 mm größer ist als diese Breite.

Bei einer weiteren, besonders bevorzugten Ausführung verläuft den erhöhten Kantenbereichen benachbart jeweils je ein Mikroeinschnitt, auf welchen weiter blockinnseitig jeweils ein Einschnitt folgt. Besonders vorteilhaft ist es ferner, wenn zwischen den Einschnitten jeweils ein Mikroeinschnitt oder zwei Mikroeinschnitte verlaufen. Eine derartige Anordnung der Mikroeinschnitte ist für eine besonders gute Ableitung der sich auf eisigem oder schneeigem Untergrund beim Abrollen des Reifens bildenden Wasserfilms von Vorteil.

Besonders gute Griffeigenschaften auf schneeigem Untergrund lassen sich mit einer Ausführung erzielen, bei welcher sich die Einschnitte und die Mikroeinschnitte in Draufsicht auf insbesondere gleiche Weise jeweils aus einer Anzahl von unter Winkeln zueinander verlaufenden Abschnitten zusammensetzen. Die Winkel, die die Abschnitte miteinander einschließen, können stumpfe oder spitze Winkel sein, letztere beispielsweise bei zickzackförmig verlaufenden Einschnitten und Mikroeinschnitten.

Besonders vorteilhaft ist dabei eine Ausführung, bei der die Einschnitte Abschnitte aufweisen, welche eine größere Breite besitzen, als die übrigen Abschnitte, wobei diese Abschnitte vorzugsweise parallel oder nahezu parallel zu den querrillenseitigen Profilblockkanten verlaufen. Diese breiteren Abschnitte bilden Schneetaschen, in welchen sich auf schneeigem Untergrund Schnee ansammelt, so dass derart die Schnee/Schneereibung des Laufstreifens erhöht wird.

Zur Bildung der erwähnten Schneetaschen können sämtliche oder einige der Trapezschenkel-Abschnitte durch verbindende Abschnitte miteinander verbunden sein, welche jene Abschnitte sind, die eine größere Breite aufweisen als die übrigen Abschnitte.

Besonders bevorzugt ist dabei eine Ausführung, bei welcher in jenen Einschnitten, die zu den querrillenseitigen Profilblockkanten am Nächsten verlaufen, nur die jeweils näher zu den querrillenseitigen Profilblockkanten befindlichen verbindenden Abschnitte jene Abschnitte sind, die eine größere Breite aufweisen als die übrigen Abschnitte.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine vergrößerte Draufsicht auf zwei Profilblöcke eines Laufstreifens eines Fahrzeugluftreifens mit einer Ausführungsvariante der Erfindung,
Fig. 1a eine Schnittdarstellung entlang der Linie Ia - Ia der Fig. 1 und
Fig. 2 in einer zu Fig. 1 analogen Darstellung eine zweite Ausführungsvariante der Erfindung.

Fahrzeugluftreifen gemäß der Erfindung sind für den Einsatz unter winterlichen Fahrbedingungen, also auf Schnee oder Eis, besonders gut geeignet und sind insbesondere Reifen in Radialbauart für Personenkraftwagen, Vans oder Light Trucks.

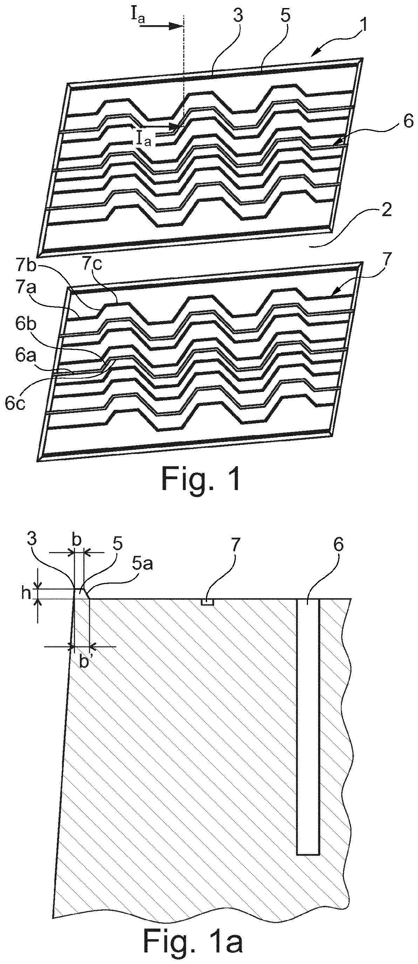

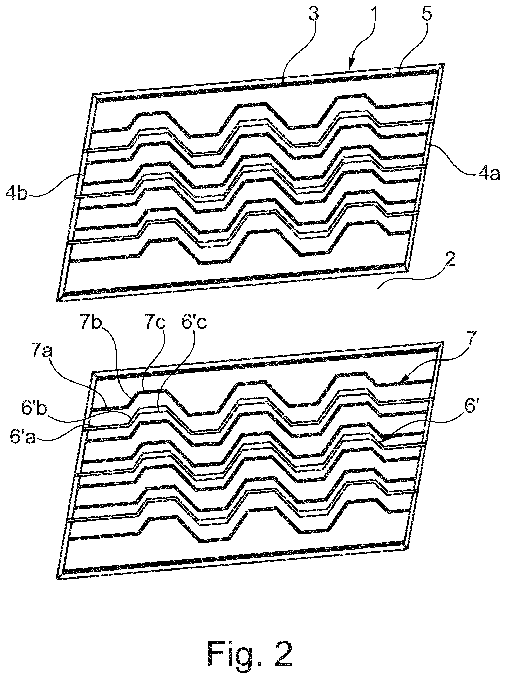

Fig. 1 und Fig. 2 zeigen Draufsichten auf jeweils zwei in einer vereinfachten Gestalt dargestellte Profilblöcke 1, die insbesondere zu einer in Umfangsrichtung eines Laufstreifens eines Fahrzeugluftreifens umlaufenden Profilblockreihe gehören. Profilblockreihen mit erfindungsgemäß gestalteten Profilblöcken können laufstreifenrand- bzw. schulterseitig oder im zentralen bzw. mittleren Bereich des Laufstreifens angeordnet sein. Ist die Profilblockreihe im mittleren Laufstreifenbereich angeordnet, ist sie seitlich beispielsweise von in Umfangsrichtung des Laufstreifens verlaufenden Umfangsrillen, die nicht dargestellt sind, begrenzt. Die Profilblöcke einer schulterseitig verlaufenden Profilblockreihe sind üblicherweise laufstreifeninnenseitig von Rillen begrenzt, die beispielsweise Umgangsrillen oder Abschnitte von Umgangsrillen sind aber auch Rillenabschnitte von in Richtung Laufstreifenmitte verlaufenden Schrägrillen und dergleichen sein können. In Umfangsrichtung unmittelbar aufeinander folgende Profilblöcke 1 sind voneinander durch je eine Querrille 2 getrennt. In im mittleren Laufstreifenbereich verlaufenden Profilblockreihen erstrecken sich die Querrillen 2 üblicherweise unter einem Winkel ≤ 45°, in schulterseitigen Profilblockreihen üblicherweise unter einem Winkel ≤ 30° zur axialen Richtung des Laufstreifens. Innerhalb der Profilblockreihen verlaufen die Querrillen 2 parallel oder weitgehend parallel zueinander.

Jeder Profilblock 1 ist in Umfangsrichtung und an der Laufstreifenperipherie sowie bei und entlang den Querrillen 2 - nachfolgend auch als querrillenseitig bezeichnet - von zwei parallel oder nahezu parallel zueinander und gerade verlaufenden Profilblockkanten 3 begrenzt. Gehören die Profilblöcke 1 zu einer im mittleren Bereich des Laufstreifens angeordneten Profilblockreihe so sind sie bei den nicht gezeigten Umfangsrillen beispielsweise von Profilblockkanten 4a, 4b begrenzt, die parallel zueinander verlaufen, wie in Fig. 1 und in Fig. 2 gezeigt. In schulterseitig verlaufenden Profilblockreihen sind die Profilblöcke, wie erwähnt, lediglich laufstreifeninnenseitig von Rillen begrenzt und weisen daher auch nur bei diesen Profilblockkanten auf.

Die Profilblockkanten 3 begrenzen jeden Profilblock 1 auf gegenüber der sonstigen Profilblockoberfläche erhöhten Kantenbereichen 5. Wie Fig. 1a zeigt sind die erhöhten Kantenbereiche 5 schmale, bei den gezeigten Ausführungen über die gesamte Erstreckung der Profilblockkanten 3 verlaufende rippenartige Erhebungen, die gegenüber dem Niveau der sonstigen Profiblockoberfläche eine Höhe h aufweisen, welche 0,2 mm bis 0,5 mm, insbesondere bis zu 0,3 mm beträgt und in sämtlichen Profilblöcken 1 einer Profilblockreihe gleich groß ist. Die erhöhten Kantenbereiche 5 weisen an ihrer Oberseite eine Breite b von 0,2 mm bis 1,2 mm, insbesondere von 0,3 mm bis zu 1,0 mm, auf. Zur Profilblockoberfläche erfolgt der Übergang der erhöhten Kantenbereiche 5 beispielsweise und wie in Fig. 1a gezeigt über schräge, alternativ über in radialer Richtung verlaufende oder im Querschnitt konvex gerundet ausgeführte Flankenflächen 5a, sodass die erhöhten Kantenbereiche 5 an ihrer Basis, am Niveau der Profilblockoberflächen, eine Breite b' aufweisen, die zumindest der Breite b entspricht, insbesondere um 0,1 mm bis 0,4 mm größer ist als die Breite b. Bei einer alternativen Ausführung sind auch jene Profilblockkanten 4a, 4b, welche die Profilblöcke 1 seitlich, etwa zu Umfangsrillen, begrenzen, mit erhöhten Kantenbereichen, wie dargestellt und beschrieben, versehen.

Die Profilblöcke 1 sind, wie nachfolgend näher erläutert wird, mit Einschnitten 6 (Fig. 1), Einschnitten 6' (Fig. 2) sowie mit Mikroeinschnitten 7 versehen. Die Einschnitte 6, 6' unterscheiden sich von den Mikroeinschnitten 7 durch ihre Breite und ihre Tiefe bzw. den Verlauf ihrer Tiefe. Die Breite der Einschnitte 6, 6' an der Profilblockoberfläche beträgt 0,4 mm bis 1,2 mm, insbesondere bis 0,9 mm, wobei die Einschnitte 6 über ihre Erstreckung eine insbesondere konstante Breite von bis zu 0,6 mm, die Einschnitte 6' Abschnitte mit einer Breite von bis 0,6 mm und Abschnitte mit größeren Breite, wie nachfolgend noch näher beschrieben wird, aufweisen. Die Mikroeinschnitte 7 weisen eine Breite auf, die kleiner ist als 0,4 mm, und vorzugsweise 0,2 mm bis 0,3 mm beträgt. Die Tiefe der Mikroeinschnitte beträgt 0,2 mm bis 0,5 mm.

Die Einschnitte 6, 6' hingegen weisen eine Tiefe auf, die an den seichtesten Stellen der Einschnitte 6, 6' mindestens 20 % der Profiltiefe, die üblicherweise der größten Tiefe von Umfangsrillen im Laufstreifen entspricht, beträgt. Darüber hinaus weisen die Einschnitte 6, 6' an ihren tiefsten Stellen eine Tiefe auf, die der Profiltiefe entsprechen kann, vorzugsweise jedoch mindestens um 1,6 mm geringer ist als die Profiltiefe. Sowohl die Einschnitte 6, 6' als auch die Mikroeinschnitte 7 durchqueren den Profilblock 1 und erstrecken sich parallel oder nahezu parallel zu den Profilblockkanten 3 und somit auch parallel zueinander ohne einander zu kreuzen. Bei den dargestellten Ausführungsbeispielen befinden sich in jedem Profilblock 1 drei Einschnitte 6 bzw. 6', wobei die Anzahl der Einschnitte 6, 6' zumindest zwei beträgt und insbesondere bis zu sieben, vorzugsweise bis zu fünf, betragen kann. Den Profilblockkanten 3 benachbart verläuft jeweils ein Mikroeinschnitt 7, zwischen den Einschnitten 6, 6' befindet sich jeweils zumindest ein Mikroeinschnitt 7, vorzugsweise befinden sich zwei Mikroeinschnitte 7 zwischen einzelnen oder sämtlichen Einschnitten 6, 6'. Bei den in Fig. 1 und Fig. 2 dargestellten Ausgestaltungen der Einschnitte 6, 6' und der Mikroeinschnitte 7 weisen diese gerade und parallel zu den Profilblockkanten 3 verlaufende Endabschnitte 6a, 6'a und 7a auf. Zwischen diesen Endabschnitten 6a, 6'a und 7a weisen die Einschnitte Abschnitte auf, die insgesamt und in Draufsicht entlang von aneinander anschließenden, abwechselnd in die eine und in die andere Umfangsrichtung bzw. abwechselnd zur einen und zur anderen Profilblockkante 3 weisenden, basislosen und gleichschenkeligen, weitgehend übereinstimmend ausgeführten Trapezen verlaufen, wobei die unmittelbar aneinander angrenzenden Trapeze gemeinsame Trapezschenkel-Abschnitte 6b, 6'b und 7b besitzen. Die Trapezschenkel-Abschnitte 6b, 6'b, 7b der Einschnitte 6, 6' und Mikroeinschnitte 7 schließen in Draufsicht miteinander einen Winkel von insbesondere 110° bis 160° ein. Die diese Trapezschenkel-Abschnitte 6b, 6'b, 7b jeweils verbindenden Abschnitte 6c, 6'c, 7c verlaufen parallel zu den Endabschnitten 6a, 6'a und 7a.

Bei der in Fig. 1 gezeigten Ausführung weisen die Einschnitte 6 über ihren Verlauf eine konstante Breite auf. Bei der in Fig. 2 gezeigten Ausführungsvariante weisen sämtliche oder bestimmte, die Trapezschenkel-Abschnitte 6'b verbindenden Abschnitte 6'c eine größere Breite auf als die Trapezschenkel-Abschnitte 6'b und die Endabschnitte 6'a. Die Breite dieser verbindenden Abschnitte 6'c ist vorzugsweise um 0,2 mm bis 0,6 mm größer als die Breite der sonstigen Abschnitte 6'a, 6'b der Einschnitte 6' und höchstens 1,2 mm.

Bei der dargestellten, bevorzugten Ausführung sind nur die jeweils näher zu den Profilblockkanten 3 befindlichen verbindenden Abschnitte 6'c der den Profilblockkanten 3 am nächsten befindlichen Einschnitte 6' breitere verbindende Abschnitte 6'c. Die sonstigen, zwischen Mikroeinschnitten 7 vorgesehenen Einschnitte 6' sind derart gestaltet, dass sämtliche verbindende Abschnitte 6'c breitere Abschnitte, wie beschrieben, sind.

### Bezugszeichenliste

- 1: ...................... Profilblock
- 2: ...................... Querrille
- 3: ......................Profilblockkante
- 4a, 4b: ...............Profilblockkante
- 5: ......................Kantenbereich
- 5a: ....................Flankenfläche
- 6, 6': .................Einschnitt
- 6a, 6'a, 7a: ........Endabschnitt
- 6b, 6'b, 7b: .......Trapezschenkel-Abschnitt
- 6c, 6'c, 7c: ........verbindender Abschnitt
- 7: ......................Mikroeinschnitt
- b, b': ................Breite
- h: ...................... Höhe

## Patentansprüche

1. Fahrzeugluftreifen mit einem Laufstreifen mit zumindest einer Profilblöcke (1) aufweisenden oder profilblockartig strukturierten Profilblockreihe, wobei die Profilblöcke (1) in Umfangsrichtung durch Querrillen (2) voneinander getrennt sind, welche sich unter einem Winkel ≤ 45° zur axialen Richtung erstrecken, wobei jeder Profilblock (1) querrillenseitig und an der Laufstreifenperipherie von Profilblockkanten (3) begrenzt ist und mit einer Anzahl von sich parallel oder weitgehend parallel zu den Querrillen (2) erstreckenden Einschnitten (6, 6') und Mikroeinschnitten (7) versehen und von diesen vorzugsweise durchquert ist, wobei die Einschnitte (6, 6') eine Breite von 0,4 mm bis 1,2 mm und die Mikroeinschnitte (7) eine Breite < 0,4 mm, eine Mindestbreite von 0,2 mm und eine Tiefe von 0,2 mm bis 0,5 mm aufweisen,
**dadurch gekennzeichnet,**
**dass** die Profilblöcke (1) unmittelbar an die Querrillen (2) anschließend erhöhte Kantenbereiche (5) aufweisen, welche zumindest abschnittsweise entlang der querrillenseitigen Profilblockkanten (3) verlaufen, gegenüber dem Niveau der sonstigen Profilblockoberfläche in radialer Richtung eine Höhe (h) von 0,2 mm bis 0,5 mm und an ihrer Oberseite jeweils eine Breite (b) von 0,2 mm bis 1,2 mm aufweisen,
wobei die Einschnitte (6, 6') und die Mikroeinschnitte (7) in Draufsicht parallel zu den querrillenseitigen Profilblockkanten (3) verlaufende Endabschnitte (6a, 6'a, 7a) und ansonsten Abschnitte (6b, 6'b, 7b, 6c, 6'c, 7c) aufweisen, die entlang von aneinander anschließenden, abwechselnd zur einen und zur anderen Profilblockkante (3) weisenden, basislosen, vorzugsweise gleichschenkeligen und zumindest weitgehend übereinstimmend ausgeführten Trapezen verlaufen, wobei die unmittelbar aneinander angrenzenden Trapeze gemeinsame Trapezschenkel-Abschnitte (6b, 6'b, 7b) besitzen.

2. Fahrzeugluftreifen nach Anspruch 1, **dadurch gekennzeichnet, dass** die erhöhten Kantenbereiche (5) über ihre Erstreckungslänge eine konstante Höhe (h) und eine konstante Breite (b) aufweisen.

3. Fahrzeugluftreifen nach Anspruch 1 oder 2, **dadurch gekennzeichnet, dass** die erhöhten Kantenbereiche (5) über die gesamte Länge der querrillenseitigen Profilblockkanten (3) verlaufen.

4. Fahrzeugluftreifen nach einem der Ansprüche 1 bis 3, **dadurch gekennzeichnet, dass** die erhöhten Kantenbereiche (5) an ihrer Oberseite eine Breite (b) von 0,3 mm bis 1,0 mm aufweisen.

5. Fahrzeugluftreifen nach einem der Ansprüche 1 bis 4, **dadurch gekennzeichnet, dass** die erhöhten Kantenbereiche (5) zum Niveau der sonstigen Profilblockoberfläche über in radialer Richtung verlaufende oder über schräg geneigte, beispielsweise konvex gerundet ausgeführte, Flankenflächen (5a) übergehen.

6. Fahrzeugluftreifen nach einem der Ansprüche 1 bis 5, **dadurch gekennzeichnet, dass** die erhöhten Kantenbereiche (5) an ihrer Basis eine insbesondere konstante Breite (b') aufweisen, die zumindest ihrer Breite (b) an der Oberseite entspricht, insbesondere um 0,1 mm bis 0,4 mm größer ist als diese Breite (b).

7. Fahrzeugluftreifen nach einem der Ansprüche 1 bis 6, **dadurch gekennzeichnet, dass** den erhöhten Kantenbereichen (5) benachbart je ein Mikroeinschnitt (7) verläuft, auf welchen jeweils ein Einschnitt (6, 6') folgt.

8. Fahrzeugluftreifen nach Anspruch 1 oder 7, **dadurch gekennzeichnet, dass** zwischen den Einschnitten (6, 6') jeweils ein Mikroeinschnitt oder zwei Mikroeinschnitte (7) verlaufen.

9. Fahrzeugluftreifen nach einem der Ansprüche 1, 7 oder 8, **dadurch gekennzeichnet, dass** sich die Einschnitte und die Mikroeinschnitte (6, 6', 7) in Draufsicht auf insbesondere gleiche Weise jeweils aus einer Anzahl von unter Winkeln zueinander verlaufenden Abschnitten (6a, 6'a, 7a, 6b, 6'b, 7b, 6c, 6'c, 7c) zusammensetzen.

10. Fahrzeugluftreifen nach einem der Ansprüche 1 oder 7 bis 9, **dadurch gekennzeichnet, dass** die Einschnitte (6') Abschnitte (6'c) aufweisen, welche eine größere Breite besitzen, als die übrigen Abschnitte (6'a, 6'b).

11. Fahrzeugluftreifen nach Anspruch 10, **dadurch gekennzeichnet, dass** die Abschnitte (6'c) mit der größeren Breite parallel zu den querrillenseitigen Profilblockkanten (3) verlaufen.

12. Fahrzeugluftreifen nach Anspruch 10 oder 11, **dadurch gekennzeichnet, dass** die Abschnitte (6'c) mit der größeren Breite eine Breite aufweisen, die um 0,2 bis 0,6 mm größer ist als die Breite der übrigen Abschnitte (6'a, 6'b) dieser Einschnitte (6') und höchstens 1,2 mm beträgt.

13. Fahrzeugluftreifen nach Anspruch 10, **dadurch gekennzeichnet, dass** sämtliche oder einige der Trapezschenkel-Abschnitte (6'b) durch verbindende Abschnitte (6'c) miteinander verbunden sind, welche jene Abschnitte sind, die eine größere Breite aufweisen als die übrigen Abschnitte (6'a, 6'b).

14. Fahrzeugluftreifen nach Anspruch 13, **dadurch gekennzeichnet, dass** in jenen Einschnitten (6'), die zu den querrillenseitigen Profilblockkanten (3) am nächsten verlaufen, nur die jeweils näher zu den querrillenseitigen Profilblockanten (3) befindlichen verbindenden Abschnitte (6'c) jene Abschnitte sind, die eine größere Breite aufweisen als die übrigen Abschnitte (6'a, 6'b).

## Claims

1. Pneumatic vehicle tyre having a tread with at least one row of profile blocks which has profile blocks (1) or is structured in the manner of profile blocks, wherein the profile blocks (1) are separated from one another in the circumferential direction by transverse channels (2), which extend at an angle of ≤ 45° with respect to the axial direction, wherein each profile block (1) is delimited on the transverse channel side and at the tread periphery by profile block edges (3) and is provided with, and preferably crossed by, a number of sipes (6, 6') and micro-sipes (7), which extend parallel or largely parallel to the transverse channels (2), wherein the sipes (6, 6') have a width of 0.4 mm to 1.2 mm and the micro-sipes (7) have a width of < 0.4 mm, a minimum width of 0.2 mm and a depth of 0.2 mm to 0.5 mm,
**characterized**
**in that** the profile blocks (1) have, directly adjoining the transverse channels (2), elevated edge regions (5) which run, at least in certain portions, along the profile block edges (3) on the transverse channel side and which have a height (h) of 0.2 mm to 0.5 mm in a radial direction relative to the level of the rest of the profile block surface and which each have a width (b) of 0.2 mm to 1.2 mm on their upper side,
wherein the sipes (6, 6') and the micro-sipes (7) have, in plan view, end portions (6a, 6'a, 7a) extending parallel to the profile block edges (3) on the transverse channel side and otherwise portions (6b, 6'b, 7b, 6c, 6'c, 7c) that run along baseless, preferably isosceles and at least largely coinciding trapezoids adjoining one another and facing alternately one and the other profile block edge (3), wherein the trapezoids directly adjoining one another have common trapezoid leg portions (6b, 6'b, 7b).

2. Pneumatic vehicle tyre according to Claim 1, **characterized in that** the elevated edge regions (5) have a constant height (h) and a constant width (b) over the length of their extent.

3. Pneumatic vehicle tyre according to Claim 1 or 2, **characterized in that** the elevated edge regions (5) run over the entire length of the profile block edges (3) on the transverse channel side.

4. Pneumatic vehicle tyre according to one of Claims 1 to 3, **characterized in that** the elevated edge regions (5) have on their upper side a width (b) of 0.3 mm to 1.0 mm.

5. Pneumatic vehicle tyre according to one of Claims 1 to 4, **characterized in that** the elevated edge regions (5) transition to the level of the rest of the profile block surface by way of flank surfaces (5a) running in the radial direction or by way of sloping, for example convexly rounded, flank surfaces (5a).

6. Pneumatic vehicle tyre according to one of Claims 1 to 5, **characterized in that** the elevated edge regions (5) have at their base an in particular constant width (b'), which corresponds at least to their width (b) on the upper side, in particular is greater by 0.1 mm to 0.4 mm than said width (b).

7. Pneumatic vehicle tyre according to one of Claims 1 to 6, **characterized in that**, adjacent to the elevated edge regions (5), there runs in each case one microsipe (7), which is followed by in each case one sipe (6, 6').

8. Pneumatic vehicle tyre according to one of Claims 1 to 7, **characterized in that** in each case one microsipe or two micro-sipes (7) run(s) between the sipes (6, 6').

9. Pneumatic vehicle tyre according to one of Claims 1, 7 or 8, **characterized in that**, in plan view, the sipes and the micro-sipes (6, 6', 7) are respectively composed, in particular in the same way, of a number of portions (6a, 6'a, 7a, 6b, 6'b, 7b, 6c, 6'c, 7c) which run at angles with respect to one another.

10. Pneumatic vehicle tyre according to one of Claims 1 or 7 to 9, **characterized in that** the sipes (6') have portions (6'c) which have a greater width than the rest of the portions (6'a, 6'b).

11. Pneumatic vehicle tyre according to Claim 10, **characterized in that** the portions (6'c) with the greater width extend parallel to the profile block edges (3) on the transverse channel side.

12. Pneumatic vehicle tyre according to Claim 10 or 11, **characterized in that** the portions (6'c) with the greater width have a width which is greater by 0.2 mm to 0.6 mm than the width of the rest of the portions (6'a, 6'b) of said sipes (6') and is at most 1.2 mm.

13. Pneumatic vehicle tyre according to Claim 10, **characterized in that** all or some of the trapezoid leg portions (6'b) are connected to one another by connecting portions (6'c), which are those portions which have a greater width than the rest of the portions (6'a, 6'b).

14. Pneumatic vehicle tyre according to Claim 13, **characterized in that**, in those sipes (6') which run closest to the profile block edges (3) on the transverse channel side, only the connecting portions (6'c) respectively located closer to the profile block edges (3) on the transverse channel side are those portions which have a greater width than the rest of the portions (6'a, 6'b).

## Revendications

1. Pneumatique de véhicule, comprenant une bande de roulement dotée d'au moins une rangée de blocs de sculpture présentant des blocs de sculpture (1) ou structurée en mode blocs de sculpture, les blocs de sculpture (1) étant séparés les uns des autres dans la direction circonférentielle par des rainures transversales (2) qui s'étendent selon un angle ≤ 45° par rapport à la direction axiale, chaque bloc de sculpture (1) étant délimité côté rainure transversale et au niveau de la périphérie de bande de roulement par des arêtes de blocs de sculpture (3), et étant muni d'un certain nombre d'entailles (6, 6') et de micro-entailles (7) s'étendant de manière parallèle ou substantiellement parallèle aux rainures transversales (2) et étant de préférence traversé par celles-ci, les entailles (6, 6') présentant une largeur de 0,4 mm à 1,2 mm et les micro-entailles (7) présentant une largeur < 0,4 mm, une largeur minimale de 0,2 mm et une profondeur de 0,2 mm à 0,5 mm,
**caractérisé en ce que** les blocs de sculpture (1) présentent de manière directement adjacente aux rainures transversales (2) des zones d'arête élevées (5) qui s'étendent au moins par endroits le long des arêtes de blocs de sculpture (3) côté rainure transversale, présentant par rapport au niveau du reste de la surface de bloc de sculpture dans la direction radiale une hauteur (h) de 0,2 mm à 0,5 mm et sur leur face supérieure respectivement une largeur (b) de 0,2 mm à 1,2 mm,
les entailles (6, 6') et les micro-entailles (7) présentant en vue de dessus des parties d'extrémité (6a, 6'a, 7a) s'étendant en parallèle aux arêtes de blocs de sculpture (3) côté rainure transversale et par ailleurs des parties (6b, 6'b, 7b, 6c, 6'c, 7c) qui s'étendent le long de trapèzes consécutifs les uns aux autres, orientés en alternance vers une arête de blocs de sculpture (3) ou vers l'autre, sans base, de préférence isocèles et réalisés de manière au moins largement coïncidente, les trapèzes directement adjacents les uns aux autres possédant des parties de côté de trapèze communes (6b, 6'b, 7b).

2. Pneumatique de véhicule selon la revendication 1, **caractérisé en ce que** les zones d'arête élevées (5) présentent sur leur longueur d'étendue une hauteur (h) constante et une largeur (b) constante.

3. Pneumatique de véhicule selon la revendication 1 ou 2, **caractérisé en ce que** les zones d'arête élevées (5) s'étendent sur toute la longueur des arêtes de blocs de sculpture (3) côté rainure transversale.

4. Pneumatique de véhicule selon l'une quelconque des revendications 1 à 3, **caractérisé en ce que** les zones d'arête élevées (5) présentent sur leur face supérieure une largeur (b) de 0,3 mm à 1,0 mm.

5. Pneumatique de véhicule selon l'une quelconque des revendications 1 à 4, **caractérisé en ce que** les zones d'arête élevées (5) passent au niveau du reste de la surface de bloc de sculpture par l'intermédiaire de surfaces de flanc (5a) s'étendant dans la direction radiale ou inclinées de façon oblique, par exemple réalisées avec un arrondi convexe.

6. Pneumatique de véhicule selon l'une quelconque des revendications 1 à 5, **caractérisé en ce que** les zones d'arête élevées (5) présentent au niveau de leur base une largeur (b') en particulier constante qui correspond au moins à leur largeur (b) sur la surface supérieure, étant en particulier supérieure de 0,1 mm à 0,4 mm à cette largeur (b).

7. Pneumatique de véhicule selon l'une quelconque des revendications 1 à 6, **caractérisé en ce que** de façon adjacente aux zones d'arête élevées (5) s'étend respectivement une micro-entaille (7) suivie respectivement d'une entaille (6, 6').

8. Pneumatique de véhicule selon la revendication 1 ou 7, **caractérisé en ce que** respectivement une micro-entaille ou deux micro-entailles (7) s'étend(ent) entre les entailles (6, 6').

9. Pneumatique de véhicule selon l'une quelconque des revendications 1, 7 ou 8, **caractérisé en ce que** les entailles et les micro-entailles (6, 6', 7) en vue de dessus sont composées en particulier de la même manière respectivement d'un nombre de parties (6a, 6'a, 7a, 6b, 6'b, 7b, 6c, 6'c, 7c) s'étendant selon des angles les unes par rapport aux autres.

10. Pneumatique de véhicule selon l'une quelconque des revendications 1 ou 7 à 9, **caractérisé en ce que** les entailles (6') présentent des parties (6'c) qui possèdent une plus grande largeur que les autres parties (6'a, 6'b).

11. Pneumatique de véhicule selon la revendication 10, **caractérisé en ce que** les parties (6'c) de largeur supérieure s'étendent en parallèle aux arêtes de blocs de sculpture (3) côté rainure transversale.

12. Pneumatique de véhicule selon la revendication 10 ou 11, **caractérisé en ce que** les parties (6'c) de largeur supérieure présentent une largeur qui est supérieure de 0,2 à 0,6 mm à la largeur des parties restantes (6'a, 6'b) de ces entailles (6') et mesure au maximum 1,2 mm.

13. Pneumatique de véhicule selon la revendication 10, **caractérisé en ce que** toutes les parties de côté de trapèze (6'b) ou quelques unes de celles-ci sont reliées les unes aux autres par des parties de liaison (6'c) qui sont les parties qui présentent une largeur supérieure à celle des parties restantes (6'a, 6'b).

14. Pneumatique de véhicule selon la revendication 13, **caractérisé en ce que** dans les entailles (6') qui s'étendent au plus près des arêtes de blocs de sculpture (3) côté rainure transversale, seules les parties de liaison (6'c) se trouvant respectivement plus près des arêtes de blocs de sculpture (3) côté rainure transversale sont les parties qui présentent une largeur supérieure à celle des parties restantes (6'a, 6'b).
